(19) **Europäisches Patentamt**

**European Patent Office**

**Office européen des brevets**

(11) **EP 1 314 951 A2**

(12) **EUROPÄISCHE PATENTANMELDUNG**

(43) Veröffentlichungstag:
28.05.2003 Patentblatt 2003/22

(51) Int Cl.⁷: **F41G 7/22**

(21) Anmeldenummer: 02024810.0

(22) Anmeldetag: 07.11.2002

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **22.11.2001 DE 10157287**

(71) Anmelder: **Bodenseewerk Gerätetechnik GmbH
88662 Überlingen (DE)**

(72) Erfinder: **Beutel, Andreas
88662 Überlingen (DE)**

(74) Vertreter: **Weisse, Renate Dr. et al
Weisse & Wolgast
Bökenbuschstr. 41
42555 Velbert (DE)**

(54) **Verfahren zur Bestimmung von Lenkkommandos für im Raum bewegliche Objekte**

(57)    Die Erfindung betrifft ein Verfahren zur Bestimmung von zu einem Stellvektor zusammenfaßbaren Lenkkommandos für einen zielverfolgenden Flugkörper und ein verfolgtes Kampfflugzeug. Wenigstens der Flugkörper enthält einen Suchkopf zur Erfassung eines Zustandsvektors der Bewegungsgeometrie. Der Flugkörper sucht den Abstand zum Ziel zu null zu machen (Treffer), während das Kampfflugzeug diesen Abstand durch Ausweichmanöver möglichst groß zu machen trachtet. In einem signalverarbeitenden Rechner wird der Zusammenhang zwischen dem Zustandsvektor und seiner Änderung mit zustandsabhängigen Matrizen faktorisiert, wobei eine ungestörte Systemdarstellung und Darstellung von Störungen abhängig von Stellvektoren des Flugkörpers bzw. Kampfflugzeugs erhalten werden. Für Flugkörper und Kampfflugzeug wird im Sinne eines Nullsummen- Differentialspiels ein Regelgesetz aus einem festgelegten Gütefunktional zur Bestimmung des Stellvektors für den Flugkörper die sich daraus ergebene Matrix-Riccati-Gleichung gelöst.

FIG. 1

EP 1 314 951 A2

Printed by Jouve, 75001 PARIS (FR)

**Beschreibung**

Die Erfindung betrifft ein Verfahren zur Bestimmung von zu einem Stellvektor zusammenfaßbaren Lenkkommandos für wenigstens eines von zwei im Raum beweglichen Objekten, von denen ein erstes (Verfolger) das zweite zu treffen und das zweite (Ausweicher) einen solchen Treffer zu vermeiden sucht, wobei wenigstens eines der Objekte Mittel zur Erfassung eines Zustandsvektors der Bewegungsgeometrie enthält.

Das erste Objekt kann beispielsweise ein zielverfolgender Flugkörper sein, während das zweite Objekt ein von dem Flugkörper angegriffenes Ziel, z.B. ein Flugzeug ist. Der Flugkörper weist einen Suchkopf auf, welcher einen Zustandsvektor der Begegnungsgeometrie, z.B. in Form der Sichtlinien- Drehrate $\sigma$ im inertialen Raum, der Entfernung R zwischen Flugkörper und Ziel und der Änderungsrate R dieser Entfernung, liefert. Der Flugkörper erhält Lenkkommandos, z.B. in Form von kommandierten Querbeschleunigungen, durch welche der Flugkörper zu dem Ziel geführt wird und dieses trifft. Das Ziel sucht durch Fluchtmanöver dem Flugkörper zu entkommen und einen Treffer zu vermeiden. Die Erfindung betrifft ein Verfahren zur Bestimmung optimaler Lenkkommandos für den Flugkörper, zum Erzielen eines Treffers.

Die Erfindung kann aber auch in einem als Ziel von einem zielverfolgenden Flugkörper angegriffenen Flugzeug verwendet werden, um Fluchtmanöver zu optimieren und einen Treffer zu vermeiden. Auch ein Kampfflugzeug weist Sensoren auf, die anfliegende Flugkörper erfassen und Informationen über die Relativgeometrie liefern.

Die Erfindung ist generell anwendbar, um Kollisionen zwischen im Raum beweglichen Objekten, z.B. Robotern oder autonomen Fahrzeugen entweder zu bewirken oder zu vermeiden.

Der Erfindung liegt die Aufgabe zugrunde optimale Lenksignale zu erzeugen, durch welche eine Kollision zwischen zwei im Raum bewegten Objekten erreicht bzw. verhindert wird.

Erfindungsgemäß wird diese Aufgabe dadurch gelöst, daß in einem signalverarbeitenden Rechner

(a) der Zusammenhang zwischen dem Zustandsvektor und seiner Änderung mit zustandsabhängigen Matrizen faktorisiert wird, wobei eine ungestörte Systemdarstellung und Darstellung von Störungen abhängig von Stellvektoren des ersten und des zweiten Objekts erhalten werden, und

(b) für das erste und das zweite Objekt im Sinne eines Nullsummen- Differentialspiels ein Gütefunktional festgelegt und zur Bestimmung des Stellvektors für das wenigstens eine Objekt die sich daraus ergebene Matrix-Riccati-Gleichung gelöst wird.

Die Erfindung beruht auf folgenden Überlegungen:

Die Verfolgung eines Ziels mittels eines zielverfolgenden Flugkörpers und das Bestreben des Ziels (Kampfflugzeugs), diesem Flugkörper durch Ausweichmanöver zu entkommen stellt eine Konfliktsituation dar. Die beiden "Parteien" Flugkörper und Flugzeug verfolgen in einem Szenarium unterschiedliche Interessen: Der Flugkörper sucht den Abstand zum Ziel zu null oder praktisch zu null zu machen (Treffer), das Flugzeug sucht den Abstand möglichst groß zu machen (Entkommen).

Aufgabenstellungen dieser Art sind sogenannte "Nullsummenspiele" und können mit der Theorie der Differentialspiele gelöst werden. Die "Spielaufgabe" ist durch die Relativbewegung der beiden "Spieler" gegeben. Die mathematische Beschreibung des "Spiels" basiert auf den dynamischen Modellen der "Spieler", also des Flugkörpers und des Flugzeugs, und der Relativkinematik. Zu jedem Zeitpunkt liegt damit die vollständige Information über den aktuellen "Spielzustand" vor. Dabei hat jedoch kein "Spieler" Informationen über die aktuelle und zukünftige Strategie seines Gegenspielers. Die Entscheidungen, welche Strategie ein "Spieler" verfolgt, muß also unabhängig davon getroffen werden, was sein Gegenspieler tut oder tun wird. Für jeden "Spieler" ist somit diejenige Strategie die optimale, die ihm ein bestimmtes, möglichst gutes "Spielergebnis" garantiert.

Bei einem Nullsummen-Differentialspiel (bei welchem die Modelle durch Differentialgleichungen gegeben sind) handelt es sich um eine Optimierungsaufgabe für konkurrierende Steuerungen. Der Konflikt endet damit stets in einer Sattelpunktsituation mit einem Minimum-Maximum-Optimum. Die Lösung dieser Optimierungsaufgabe kann nur für einfache, lineare und zeitinvariante Modelle geschlossen analytisch erfolgen.

Die hier zu betrachtenden Systeme sind jedoch nichtlinear und zeitvariant.

Nach der Erfindung werden die nichtlinearen Differentialgleichungen des "Spieles" durch Faktorisierung in lokal gültige, lineare Differentialgleichungen überführt. Für das so entstandene zustandsabhängige System linearer Differentialgleichungen kann die Optimierungsaufgabe analytisch gelöst werden. Die sich als Ergebnis der Optimierung ergebenden optimalen Strategien, d.h. Steuerfolgen, der "Spieler" beruhen auf der Lösung einer erweiterten Matrix-Riccatigleichung. Diese Lösungen können für alle "Spieler" als geschlossene Lösungen angegeben werden.

Die Erfindung ist nachstehend an einem Ausführungsbeispiel unter Bezugnahme auf die zugehörige Zeichnungen näher erläutert.

Fig.1    zeigt die Begegnungsgeometrie eines zielverfolgenden Flugkörpers und eines Ziels in Form eines Kampfflugzeugs.

Fig.2    zeigt einen Flugkörper mit einem Suchkopf und ein Kampfflugzeug mit Sensoren, die auf anfliegende Flugkörper ansprechen.

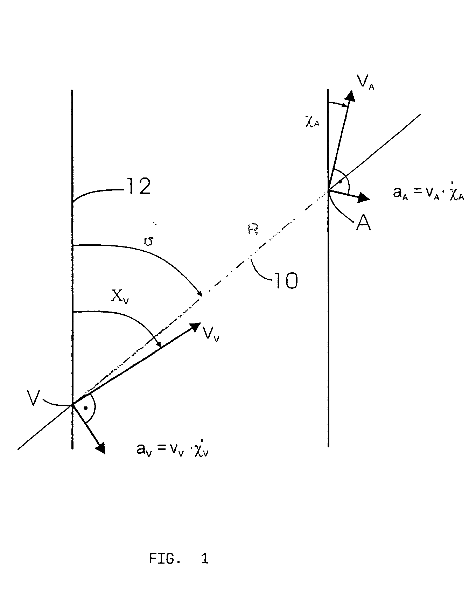

In Fig.1 ist für den zweidimensionalen Fall die Relativgeometrie eines durch "V" gekennzeichneten Verfolgers, d.h. eines Flugkörpers, und eines durch "A" gekennzeichneten Ausweichers, d.h. eines von dem Flugkörper angegriffenen Kampfflugzeugs, dargestellt. Mit $\sigma$ ist der Winkel der Sichtlinie 10 von Verfolger V zu Ausweicher A im inertialen Raum, also bezogen auf eine raumfeste Achse 12 bezeichnet. $\sigma$ ist die Zeitableitung dieses Winkels, also die Sichtlinien-Drehrate. Der Abstand zwischen Verfolger V und Ausweicher A ist mit R bezeichnet. $R$ bezeichnet die Zeitableitung dieses Abstands. R und R können mit Radar oder Ladar im Suchkopf des Verfolgers gemessen werden. $v_V$ bezeichnet die Geschwindigkeit des Verfolgers V, $v_A$ bezeichnet die Geschwindigkeit des Ausweichers A. Mit $\chi_V$ und $\chi_A$ sind die Bahnwinkel des Verfolgers bzw. des Ausweichers im Raum, also bezogen auf die raumfeste Achs 12 bezeichnet. Senkrecht zu den Geschwindigkeitsvektoren $v_V$ und $v_A$ liegen die Vektoren der Querbeschleunigungen $a_V$ bzw. $a_A$.
Es ist: $a_V = v_V \, \dot{\chi}_V$ und $a_A = v_A \dot{\chi}_A$.
Für die Relativgeometrie von Verfolger V und Ausweicher A gilt:

$$\dot{R} = v_A \cos(\chi_A - \sigma) - v_V \cos(\chi_V - \sigma)$$

$$R\dot{\sigma} = v_A \sin(\chi_A - \sigma) - v_V \sin(\chi_V - \sigma)$$

Durch Ableitung der beiden Gleichungen ergibt sich

$$\ddot{R} = \dot{v}_A \cos(\chi_A - \sigma) - v_A \sin(\chi_A - \sigma)\,\dot{\chi}_A + v_A \sin(\chi_V - \sigma)\dot{\sigma} - \dot{v}_V \cos(\chi_V - \sigma)$$
$$+ v_v \sin(\chi_V - \sigma)\,\dot{\chi}_V - v_V \sin(\chi_V - \sigma)\dot{\sigma} =$$
$$R\dot{\sigma}^2 + a_{Ax}^L - \cos(\lambda)\,a_{Vx}^k - \sin(\lambda)\,a_{Vy}^k$$

$$R\ddot{\sigma} = -\dot{R}\dot{\sigma} + \dot{v}_A \sin(\chi_A - \sigma) + v_A \cos(\chi_A - \sigma)\,\dot{\chi}_A - v_A \cos(\chi_A - \sigma)\dot{\sigma} +$$
$$\dot{v}_V \sin(\chi_V - \sigma) - v_V \cos(\chi_V - \sigma)\,\dot{\chi}_V + v_V \cos(\chi_V - \sigma)\dot{\sigma} =$$
$$= -2\dot{R}\dot{\sigma} + a_{Ay}^L + \sin(\lambda)\,a_{Vx}^k - \cos(\lambda)\,a_{Vy}^k$$

Dabei sind die Beschleunigungen des Ausweichenden $\underline{\alpha}^L_A$ im Koordinatensystem der Sichtlinie 10 und die Beschleunigungen $\underline{\alpha}^k_V$ des Verfolgers in dessen körperfestem Koordinatensystem angegeben. In dem letzteren Koordinatensystem werden die Stellgrößen tatsächlich aufgebracht, welche den Verfolger zu dem Ziel, d.h. dem Ausweicher A, führen sollen. $\lambda$ ist der Schielwinkel zwischen der Längsachse des Verfolgers V und der Sichtlinie 10.
Für den Zustandsvektor $\underline{x} = [R, \dot{R}, \dot{\sigma}]$ wird durch Faktorisierung das zustandsabhängige lineare System abgeleitet:

$$\underline{\dot{x}} = F(\underline{x})\,\underline{x} + \underline{G}_V(\underline{x})\,\underline{u}_V + \underline{G}_A(\underline{x})\,\underline{u}_A.$$

Dabei sind $\underline{u}_V$ und $\underline{u}_A$ die Stellgrößenvektoren von Verfolger (Flugkörper) und Ausweicher (Kampfflugzeug). Ein zustandsabhängiges, lineares System ist durch die Matrix $\underline{F}(\underline{x})$ bestimmt. Diese liefert für jeden Zustand $\underline{x}$ einen linearen Zusammenhang zwischen $\underline{\dot{x}}$ und $\underline{x}$. Dieses System wird angesteuert, also beeinflußt, einmal durch den Stellvektor $\underline{u}_V$ des Verfolgers V mit einer zustandsabhängigen Eingangsmatrix $\underline{G}_V$ und zum anderen von dem Stellvektor $\underline{u}_A$ des Ausweichers A mit einer ebenfalls zustandsabhängigen Eingangsmatrix $\underline{G}_A$.
Die Systemmatrix dieses Systems ist

$$\underline{F}(\underline{x}) = \begin{bmatrix} 0 & 1 & 0 \\ \dot{\sigma}^2 & 0 & 0 \\ 0 & 0 & -2\dfrac{\dot{R}}{R} \end{bmatrix}$$

Angesteuert wird dieses System über die beiden Eingangsmatrizen

$$\underline{G}_V(\underline{x}) = \begin{bmatrix} 0 & 0 \\ -\cos(\lambda) & -\sin(\lambda) \\ \dfrac{\sin(\lambda)}{R} & \dfrac{-\cos(\lambda)}{R} \end{bmatrix}$$

und

$$\underline{G}_A(\underline{x}) = \begin{bmatrix} 0 & 0 \\ 1 & 0 \\ 0 & \dfrac{1}{R} \end{bmatrix}$$

Begreift man das nichtlineare System als Nullsummen-Differentialspiel zwischen Verfolger V und Ausweicher A, so ist die Systembeschreibung unter Einbeziehung der Stellmatrix $\underline{G}_A$ zu betrachten.

Für den Verfolger kann ein linear-quadratisches Regelgesetz aus einem Gütefunktional

$$J_1 = \sqrt{(\underline{x}^T \underline{Q}\, \underline{x} + \underline{u}_V{}^T \underline{R}\, \underline{u}_V)}\, dt$$

bestimmt werden, wobei $\underline{Q}$ und $\underline{R}$ Gewichtsmatrizen sind.

Das Bestreben des Ausweichers A, dem Verfolger V optimal auszuweichen wird in einem Gütefunktional

$$J_2 = \int (\underline{x}^T \underline{Q}x + \underline{u}_V{}^T \underline{R}u_V - \underline{u}_A{}^T \underline{E}\underline{u}_A)\, dt$$

mit einer weiteren Gewichtsmatrix $\underline{E}$ berücksichtigt.

Danach muß die Matrix-Riccatigleichung

$$\underline{S} \cdot \underline{F} + \underline{F}^T \cdot \underline{S} - \underline{S}\,(\underline{G}_V\, \underline{R}^{-1} \cdot \underline{G}_V^T - \underline{G}_A \cdot \underline{E}^{-1} \cdot \underline{G}_A^T)\underline{S} + \underline{Q} = \underline{0}$$

gelöst werden. Dabei ist $\underline{S}$ die Lösung dieser Gleichung. Aus S ergeben sich die optimalen Stellvektoren, also die kommandierten Querbeschleunigungen, für den Verfolger V und den Ausweicher zu

$$\underline{u}_{opt.V} = -\,\underline{R}^{-1} \underline{G}_V^T \cdot \underline{S}\, \underline{x}$$

bzw.

$$u_{opt.A} = E^{-I} \, \underline{G}_A^T \underline{S} \, \underline{x}.$$

Das Verhältnis der beiden Matrizen $\underline{R}$ und $\underline{E}$ gibt die relativen Beschleunigungs-Fähigkeiten von Verfolger V und Ausweicher A wieder. Die Begrenzung der jeweiligen Beschleunigungen können durch zeitvariante Adaption der Gewichtsmatrizen $\underline{R}$ und $\underline{E}$ erfolgen:

$$dCorr = v^* \, (a_{Limit} - a)/a_{Limit}$$

$$Corr = max \, (\mu, Corr - dCorr)$$

$$\underline{R}_c = Corr^*\underline{R}.$$

Dabei sind $\nu$ und $\mu$ weitere Entwurfsparameter.

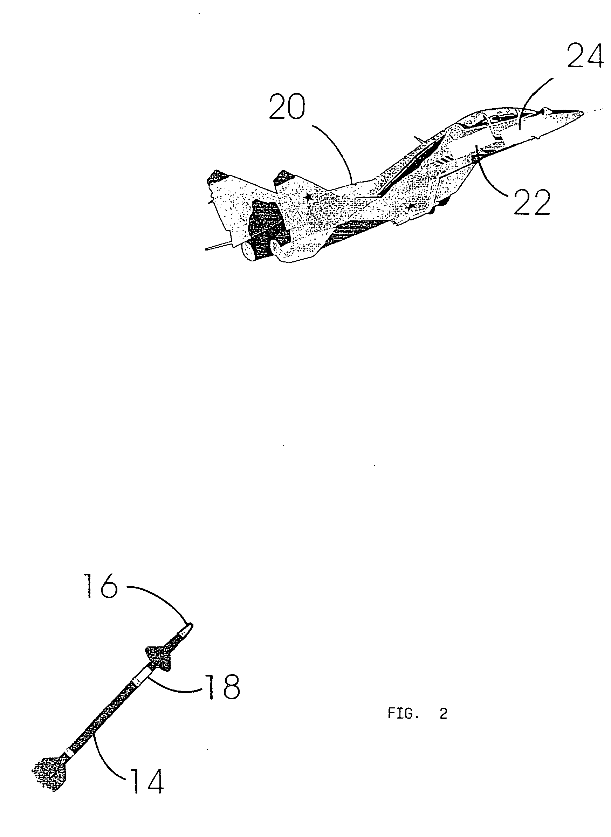

Wie aus Fig.2 ersichtlich ist, die den Fall Flugkörper (Verfolger)-Kampfflugzeug (Ausweicher) darstellt, weist der Flugkörper 14 einen Suchkopf 16 auf. Der Suchkopf 16 liefert den Zustandsvektor $\underline{x} = [R,\dot{R},\dot{\sigma}]$, also Entfernung R, z.B. aus der Laufzeit eines Puls-Radars oder -Ladars, Entfernungsänderung, z.B. aus dem Dopplereffekt, und Sichtlinien-Drehrate. Der Flugkörper 14 enthält einen Rechner 18, auf welchen der Zustandsvektor $\underline{x}$ aufgeschaltet ist und in welchem die vorstehend angegebenen Rechnungen durchgeführt werden. Der Rechner 18 liefert optimale kom-mandierte Querbeschleunigungen $\underline{u}_{opt\,V}$, welche auf die Steuerglieder des Flugkörpers 14 aufgeschaltet sind.

In entsprechender Weise hat auch ein Kampfflugzeug, das in Fig.2 mit 20 bezeichnet ist, üblicherweise Sensoren 22, welche auf anfliegende Flugkörper ansprechen und den Zustandsvektor $\underline{x}$ liefern. Auch das Kampfflugzeug weist einen Rechner 24 auf, auf welchen der Zustandsvektor $\underline{x}$ aufgeschaltet ist und welcher nach der oben angegebenen Rechnung Lenkkommandos $u_{opt\,A}$ liefert, welche ein optimales Ausweichen ermöglichen sollen.

**Patentansprüche**

1. Verfahren zur Bestimmung von zu einem Stellvektor zusammenfaßbaren Lenkkommandos für wenigstens eines von zwei im Raum beweglichen Objekten, von denen ein erstes (Verfolger) das zweite zu treffen und das zweite (Ausweicher) einen solchen Treffer zu vermeiden sucht, wobei wenigstens eines der Objekte Mittel zur Erfassung eines Zustandsrvektors der Begegnungsgeometrie enthält, **dadurch gekennzeichnet, daß** in einem signalverarbeitenden Rechner

   (a) der Zusammenhang zwischen dem Zustandsvektor und seiner Änderung mit zustandsabhänigen Matrizen faktorisiert wird, wobei eine ungestörte Systemdarstellung und Darstellung von Störungen abhängig von Stellvektoren des ersten und des zweiten Objekts erhalten werden, und

   (b) für das erste und das zweite Objekt im Sinne eines Nullsummen-Differentialspiels ein Gütefunktional festgelegt und zur Bestimmung des Stellvektors für das wenigstens eine Objekt die sich daraus ergebene Matrix-Riccati-Gleichung gelöst wird.

2. Verfahren nach Anspruch 1, **dadurch gekennzeichnet, daß** der Zustandsvektor

$$\underline{x} = [R,\dot{R},\dot{\sigma}]$$

   ist, wobei R der Abstand zwischen den Objekten und $\sigma$ die Sichtlinien-Drehrate im inertialen Raum ist.

3. Verfahren nach Anspruch 2, **dadurch gekennzeichnet, daß** der Zusammenhang zwischen dem Zustandsvektor x und seiner Änderung aus den geometrischen Beziehungen.

$$\ddot{R} = R\,\dot{\sigma}^2 + a^L_{Ax} - \cos(\lambda)\,a^k_{V_x} - \sin(\lambda)\,a^k_{V_y}$$

$$R\,\ddot{\sigma} = -2\,\dot{R}\,\dot{\sigma} + a^k_{Ay} + \sin(\lambda)\,a^k_{V_x} - \cos(\lambda)\,a^k_{V_y}$$

hergeleitet wird.

4.  Verfahren nach Anspruch 3, **dadurch gekennzeichnet, daß** durch Faktorisierung für den Zustandsvektor $\underline{x}$ das zustandsabhängige lineare System

$$\underline{x} = F(x)\,\underline{x} + \underline{G}_V\,(\underline{x})\,\underline{u}_V + \underline{G}_A\,(\underline{x})\,\underline{u}_A$$

gebildet wird, wobei die Systemmatrix

$$\underline{F}(x) = \begin{bmatrix} 0 & 1 & 0 \\ \dot{\sigma}^2 & 0 & 0 \\ 0 & 0 & -2\dfrac{\dot{R}}{R} \end{bmatrix}$$

und die Eingangsmatrizen für die Stellvektoren $\underline{u}_V$ bzw. $\underline{u}_A$

$$\underline{G}_V(\underline{x}) = \begin{bmatrix} 0 & 0 \\ -\cos(\lambda) & -\sin(\lambda) \\ \dfrac{\sin(\lambda)}{R} & \dfrac{-\cos(\lambda)}{R} \end{bmatrix}$$

und

$$\underline{G}_A(\underline{x}) = \begin{bmatrix} 0 & 0 \\ 1 & 0 \\ 0 & \dfrac{1}{R} \end{bmatrix}$$

sind.

5.  Verfahren nach Anspruch 4, **dadurch gekennzeichnet, daß** das Gütefunktional für das erste Objekt

$$J_1 = \int (\underline{x}^T \underline{Q} \underline{x} + \underline{u}_v{}^T \underline{R}_u \underline{v})\,dt$$

ist, wobei R und Q von der Eigenschaft des ersten Objekts abhängige Gewichtsmatritzen sind.

**6.** Verfahren nach Anspruch 5, **dadurch gekennzeichnet, daß** das Gütefunktional für das zweite Objekt

$$J_2 = \int (\underline{x}^T \underline{Q} \; \underline{x} + \underline{u}_V^{\;T} \; \underline{R} \; \underline{u}_V - \underline{u}_A^{\;T} \underline{E} \; \underline{u}_A) dt$$

ist, wobei E eine von den Eigenschaften des zweiten Objekts abhängige Gewichtsmatrix ist.

**7.** Verfahren nach Anspruch 6, **dadurch gekennzeichnet, daß** als Matrix-Riccati-Gleichung die Gleichung

$$\underline{S} \cdot \underline{F} + \underline{F}^T \cdot \underline{S} - \underline{S} \, (\underline{G}_V \, \underline{R}^{-1} \cdot \underline{G}_V^T - \underline{G}_A \cdot \underline{E}^{-1} \cdot \underline{G}_A^T)\underline{S} + \underline{Q} = \underline{0}$$

für $\underline{S}$ gelöst wird, wobei der optimale Stellvektor für das erste Objekt

$$\underline{u}_{opt.V} = - \underline{R}^{-1} \underline{G}_V^T \cdot \underline{S} \; \underline{x}$$

ist.

**8.** Verfahren nach Anspruch 6, **dadurch gekennzeichnet, daß** als Matrix-Riccati-Gleichung die Gleichung

$$\underline{S} \cdot \underline{F} + \underline{F}^T \cdot \underline{S} - \underline{S}(\underline{G}_V \, R^{-1} \cdot \underline{G}_V^T - \underline{G}_A \cdot E^{-1} \cdot \underline{G}_A^T)\underline{S} + \underline{Q} = 0$$

für $\underline{S}$ gelöst wird, wobei der optimale Stellvektor für das zweite Objekt

$$\underline{u}_{opt.A} = \underline{E}^{-1} \; \underline{G}_A^T \underline{S} \; \underline{x}.$$

ist.

FIG. 1

FIG. 2